# EUROPÄISCHE PATENTSCHRIFT

(11) **EP 3 356 264 B1**
(45) Veröffentlichungstag und Bekanntmachung des Hinweises auf die Patenterteilung: **13.01.2021**
(21) Anmeldenummer: 16750826.6
(22) Anmeldetag: 10.08.2016
(51) Int. Cl.: B65G 43/10, B65G 47/31

(54) **VERFAHREN ZUM ANORDNEN VON ARTIKELN**
METHOD FOR ARRANGING ARTICLES
PROCÉDÉ D'AGENCEMENT D'ARTICLES

(30) Priorität: 02.10.2015 DE 102015116785
(43) Veröffentlichungstag der Anmeldung: 08.08.2018
(73) Patentinhaber: KRONES Aktiengesellschaft, 93073 Neutraubling (DE)
(72) Erfinder: MEISINGER, Alfred, 93073 Neutraubling (DE)
(74) Vertreter: Benninger, Johannes
(86) Internationale Anmeldenummer: PCT/EP2016/069059
(87) Internationale Veröffentlichungsnummer: WO 2017/054979

(56) Entgegenhaltungen:
- EP-A1- 2 749 512
- DE-A1- 4 002 724
- DE-A1-102011 010 162
- GB-A- 2 001 029
- US-A1- 2008 082 206
- US-A1- 2009 114 508

## Beschreibung

Die vorliegende Erfindung betrifft ein Verfahren zum Anordnen von Artikeln gemäß den Merkmalen des Oberbegriffs des Anspruchs 1.

So bezieht sich die vorliegende Erfindung auf das Anordnen von in mindestens einer Reihe geförderten Artikeln zur Verarbeitung in einer nachfolgenden Produktionseinrichtung. Die Erfindung bezieht sich insbesondere auf Verpackungs- und Palettieranlagen, wie sie in der Getränkeindustrie Verwendung finden. Bei den Artikeln handelt es sich beispielsweise um zu Gebinde zusammengefasste Getränkebehälter o.ä., die für die nachfolgende Produktionseinrichtung in einer bestimmten Anordnung, insbesondere in definierten Abständen zueinander angeordnet sein müssen.

Die Artikel werden in mindestens einer Reihe einer nachfolgenden Produktionseinrichtung zugeführt. Für das korrekte Bearbeiten der Artikel durch die nachfolgende Produktionseinrichtung ist es häufig notwendig, dass die ankommenden Artikel eine gewünschte Ausrichtung und/oder einen gewünschten Abstand zueinander aufweisen. Werden Artikel in mehreren Parallelreihen der Produktionseinrichtung zugeführt, so kann es gewünscht sein, dass die Artikel in den Parallelreihen jeweils dieselben Positionen entlang der Transportstrecke einnehmen.

Es sind Vorrichtungen bekannt, bei denen die Positionskorrektur von in mindestens zwei Parallelreihen geführten Artikeln bzw. Gebinde durch Messen des Positionsversatzes der Gebinde und Regeln bzw. Steuern der Geschwindigkeit der jeweiligen Förderbänder erfolgt. Auf diese Weise können Gebinde in Gleichschritt gebracht werden.

Das Dokument EP 1 578 680 B1 beschreibt eine Vorrichtung zum Anordnen und Ausrichten von Paketen auf zwei parallel geführten Förderbändern. Hierbei wird beispielsweise ein auf dem ersten Band vorauseilendes Paket sensorisch erfasst und die Drehzahl des Antriebsmotors des ersten Förderbands gemessen. Weiterhin wird ein auf dem zweiten Band nacheilendes Paket sensorisch erfasst und die Drehzahl des Antriebsmotos des zweiten Förderbandes gemessen. Ein Zähler ermittelt die Betriebsgeschwindigkeit der Förderbänder und gleicht diese beispielsweise durch Herabsetzen der Geschwindigkeit des ersten Förderbandes und/oder Erhöhen der Geschwindigkeit des zweiten Förderbandes aus. Erst wenn der Zähler eine sogenannte Nullposition erreicht, bewegen sich die Pakete auf den Parallelförderbändern im Gleichlauf.

Mit der beschriebenen Vorrichtung kann vorteilhaft die Position von in zwei Parallelreihen geförderten Artikeln in Gleichschritt gebracht werden.

Nachteilig könnte hierbei sein, dass keine Anpassung der Position der Gebinde relativ zu der nachfolgenden Produktionseinrichtung erfolgen kann. Weiterhin benötigt das in der EP 1 578 680 B1 beschriebene Verfahren zum Anordnen und Ausrichten von Paketen mindestens zwei parallele Förderbänder. Die beschriebene Vorrichtung und das Verfahren sind nicht geeignet, die Anordnung von Gebinden auf einem einzelnen Förderband relativ zur nachfolgenden Produktionseinrichtung anzupassen.

US2008082206 offenbart ein Verfahren nach dem Oberbegriff des Anspruchs 1.

Aufgabe der Erfindung ist es ein Verfahren bereitzustellen, der die oben genannten Nachteile nicht aufweisen, insbesondere ein Verfahren, bei der die Anordnung bzw. Position der Artikel oder Gebinde innerhalb einer einzigen Transportspur an eine nachfolgende Produktionseinheit angepasst werden kann.

Die obige Aufgabe wird durch ein Verfahren gelöst, der die Merkmale des Anspruchs 1 umfasst. Weitere vorteilhafte Ausgestaltungen werden durch die Unteransprüche beschrieben.

Die Vorrichtung wird zum Transport von Artikeln, beispielsweise von Getränkebehältern, insbesondere Flaschen benutzt. Es kann sich hierbei auch um Artikelzusammenstellungen handeln, beispielsweise um eine Artikelgruppe aus lose zusammengestellten Artikeln oder um eine Artikelgruppe, bei der die Artikel durch eine Umverpackung, beispielsweise eine Schrumpffolie, eine Kartonumverpackung o.ä. zusammengefasst sind. Unter dem Begriff Artikel sind im Folgenden auch solche Gebinde o.ä. zu verstehen.

Die Artikel werden in einer Transportrichtung auf mindestens einer Transportbahn bewegt, wobei ein definierter Abstand zwischen aufeinanderfolgenden Artikeln innerhalb der mindestens einen Transportbahn ausgebildet wird. Hierbei können die Artikel in einem ununterbrochenen Massenstrom oder aber bereits beabstandet an der Transportbahn ankommen. Innerhalb der Transportbahn wird nunmehr jeweils weitgehend ein definierter Abstand zwischen aufeinanderfolgenden Artikeln eingestellt. Kommen die Artikel bereits beabstandet zu der Transportbahn, dann wird der Abstand zwischen den Artikeln überprüft und gegebenenfalls korrigiert, um ihn auf die nachfolgende Produktionseinrichtung abzustimmen.

Die mindestens eine Transportbahn umfasst eine erste Transporteinheit, eine in Transportrichtung der Artikel an die erste Transporteinheit angrenzende zweite Transporteinheit und eine Steuereinheit. Die Steuereinheit enthält Informationen zu einer Masterachse. Die Masterachse definiert die gewünschte Anordnung der Artikel in einem Bereich der zweiten Transporteinheit der Transportbahn.

Um die gewünschte Anordnung der Artikel auf der mindestens einen Transportbahn zu erzielen, umfasst die Vorrichtung weiterhin mindestens ein Detektionsmittel zur Erfassung einer Ist- Position mindestens eines Artikels auf der Transportbahn. Die Information zur ermittelten Ist- Position wird an die Steuereinheit weitergeleitet, die daraufhin eine Abweichung der Ist- Position des Artikels von einer durch die Masterachse vorgegebenen Soll- Position berechnet.

Die Steuereinheit ist zumindest mit der ersten Transporteinheit der Transportbahn und mit dem mindestens einen Detektionsmittel gekoppelt. Anhand der berechneten Abweichung zwischen der Ist- Position und der Soll- Position berechnet die Steuereinheit erfindungsgemäß einen Änderung der Geschwindigkeit und/oder Beschleunigung der ersten Transporteinheit und reguliert diese dementsprechend. Die Masterachse enthält beispielsweise Informationen zum geplanten Artikelintervall umfassend den Abstand nach dem Artikel und die Artikelgröße in Transportrichtung. Aus der Abweichung des gemessenen Ist- Wertes und dem auf der Masterachse vorgegebenen Soll- Wertes wird ein Korrekturwert für die Änderung der Geschwindigkeit und/oder Beschleunigung der ersten Transporteinheit berechnet.

Die bekannte Geschwindigkeit der zweiten Transporteinheit bleibt dagegen unverändert. Die Änderungen der Geschwindigkeit und/oder Beschleunigung der ersten Transporteinheit wirkt sich insbesondere auf die nachkommenden Artikel aus und gleicht somit die Abstände zwischen den Artikeln auf der zweiten Transporteinheit an die durch die Masterachse vorgegebenen Abstände bzw. Artikelintervalle an.

Im Gegensatz zum bekannten Stand der Technik werden somit nicht die Abstände zwischen Artikeln auf parallel laufenden Transportbahnen bzw. die Anordnung der Artikel auf parallelen Transportbahnen miteinander verglichen und aneinander angepasst. Stattdessen erfolgt die Anordnung anhand einer vorzugsweise endlos umlaufenden, virtuellen Masterachse, die durch die Steuereinheit vorgegeben wird.

Bei einem Produktwechsel, beispielsweise wenn Artikel anderer Größe verarbeitet werden sollen, oder wenn die Artikel einer anderen Produktionseinrichtung mit anderen Anforderungen zugeführt werden sollen, werden entsprechend neue Parameter in die Steuereinheit eingegeben. Beispielsweise werden geeignete Daten zu einer neuen Masterachse in die Steuereinheit eingespeichert und entsprechend von dieser verarbeitet.

Gemäß einer Ausführungsform ist das mindestens eine Detektionsmittel der zweiten Transporteinheit zugeordnet. Besonders bevorzugt ist das mindestens eine Detektionsmittel einem an die erste Transporteinheit angrenzenden Bereich der zweiten Transporteinheit zugeordnet. Die Messung einer Ist- Position eines Artikels im Bereich der zweiten Transporteinheit wirkt sich somit insbesondere nicht auf den gemessenen Artikel an sich aus, sondern erst auf die dem Artikel auf der Transportbahn nachfolgenden Artikel.

Gemäß einer weiteren Ausführungsform ist das mindestens eine Detektionsmittel der ersten Transporteinheit zugeordnet. Die Messung einer Ist- Position eines Artikels im Bereich der ersten Transporteinheit wirkt sich durch die entsprechend gesteuerte Regulierung der ersten Transporteinheit somit insbesondere auch auf den gemessenen Artikel an sich aus und nicht erst auf die dem Artikel auf der Transportbahn nachfolgenden Artikel.Eine beschriebene Vorrichtung kann also insbesondere verwendet werden, um die Abstände zwischen aufeinander folgenden Artikeln auf einer Transportbahn weitgehend an die gewünschten Abstände anzupassen. Für eine finale Feinjustierung der Abstände zwischen den Artikeln kann es vorteilhaft sein, im Anschluss an die zweite Transporteinheit der Transportbahn eine weitere Einteilvorrichtung anzuordnen, beispielsweise eine Einteilvorrichtung mit einer Schubstange.

Die Einteilvorrichtung mit mindestens einer Schubstange ist insbesondere ein umlaufendes System. Die mindestens eine Schubstange bewegt sich oberhalb der auf der Transporteinheit angeordneten und transportierten Artikel entgegen der Transportrichtung der Artikel. Die mindestens eine Schubstange taucht hinter den Artikeln ein und wird anschließend in Transportrichtung der Artikel bewegt. Da die Schubstange in der Regel eine zumindest geringfügig höhere Geschwindigkeit als die Transportgeschwindigkeit der Artikel aufweist, bringt sie die in Parallelreihen angeordneten Artikel in Gleichschritt, indem Sie an deren Rückseite anliegt und die Artikel in Transportrichtung gegebenenfalls leicht anschiebt.

Am Ende der Feinjustierstrecke taucht die Schubstange wieder nach oben aus den Artikeln heraus und wird entgegen der Transportrichtung der Artikel, oberhalb derselben zurück verfahren, um erneut zwischen nachlaufende Artikel einzutauchen und diese auf Gleichschritt zu bringen.

Gemäß einer Ausführungsform ist eine Mehrzahl von Detektionsmitteln im Bereich der ersten und/oder zweiten Transporteinheit angeordnet. Aus den unterschiedlichen gemessenen Ist- Positionen eines Artikels entlang der Transportbahn berechnet die Steuereinheit anschließend die Geschwindigkeit der ersten Transporteinheit bzw. die notwendige Geschwindigkeitsänderung bzw. Beschleunigung. Beispielsweise können mindestens ein Detektionsmittel an der ersten Transporteinheit und mindestens ein Detektionsmittel an der zweiten Transporteinheit, insbesondere im Anfangsbereich der zweiten Transporteinheit, vorgesehen sein.

Um die Geschwindigkeit bzw. Beschleunigung der ersten Transporteinheit entsprechend zu regulieren, ist eine elektronische Getriebekopplung an der ersten Transporteinheit vorgesehen, die die erste Transporteinheit an die virtuelle Masterachse koppelt. Insbesondere ist dies eine elektronische Kopplung, die vorzugsweise über die Steuereinheit reguliert werden kann.

Gemäß einer Ausführungsform umfasst die Vorrichtung mindestens zwei parallele Transportbahnen, wobei jeder Transportbahn mindestens ein Detektionsmittel zur Erfassung einer Artikelposition auf der jeweiligen Transportbahn relativ zur Masterachse zugeordnet ist. Insbesondere handelt es sich bei dem mindestens einen Detektionsmittel je Transportbahn um einen Positionssensor, der vorzugsweise im Anfangsbereich der jeweils zweiten Transporteinheit angeordnet ist. Der Positionssensor misst den Abstand zwischen einem Fixpunkt eines Artikels auf der jeweiligen Transportbahn und einem Bezugspunkt auf der gemeinsamen, virtuellen Masterachse. Der gemessene Wert wird in ein Signal umgewandelt und an die Steuereinheit übermittelt, die das Signal entsprechend auswertet.

Gemäß einer Ausführungsform sind die mindestens zwei Transportbahnen jeweils einzeln regulierbar. D.h., die jeweilige Getriebekopplung der jeweils ersten Transporteinheiten der mindestens zwei parallelen Transportbahnen wird durch die Steuereinheit individuell anhand einer auf der jeweiligen Transportbahn gemessenen Position der Artikel angesteuert, um die Artikel auf den verschiedenen Transportbahnen in Gleichschritt zu bringen. Die Regulierung der einzelnen Transportbahnen erfolgt nur aufgrund der jeweils gemessenen Position der jeweils auf der entsprechenden Transportbahn angeordneten Artikel relativ zu einer auf der gemeinsamen, virtuellen Masterachse vorgegebenen Position. Es erfolgen somit kein Vergleich der Artikelpositionen auf den Transportbahnen untereinander und insbesondere kein Angleichen der Artikelposition auf einer Transportbahn aufgrund der Artikelanordnung auf der anderen Transportbahn.

Die Erfindung bezieht sich auf ein Verfahren zum Anordnen von Artikeln, die in einer Transportrichtung auf mindestens einer Transportbahn bewegt werden, wobei ein definierter Abstand zwischen aufeinanderfolgenden Artikeln innerhalb der mindestens einen Transportbahn ausgebildet wird. Die Transportbahn wurde bereits im Detail beschreiben. Es wird mindestens eine Ist- Position mindestens eines Artikels auf der Transportbahn ermittelt und mit einer durch die Masterachse vorgegebenen Soll- Position verglichen. Aus einer Abweichung zwischen der Ist- Position des Artikels und der durch die Masterachse vorgegebenen Soll- Position berechnet die Steuereinheit eine Änderung der Geschwindigkeit und/oder Beschleunigung der ersten Transporteinheit der mindestens einen Transportbahn und reguliert diese entsprechend.

Insbesondere steuert die Steuereinheit eine der ersten Transporteinheit der Transportbahn zugeordnete erste elektronische Getriebekopplung an.

Weiterhin kann an der zweiten Transporteinheit der Transportbahn eine zweite elektronische Getriebekopplung angeordnet sein, die bei einem Produktwechsel die Anpassung der Transportgeschwindigkeit der zweiten Transporteinheit an die neu definierte Masterachse ermöglicht.

Besonders bevorzugt werden bei diesem Verfahren die erste und zweite Transporteinheit der mindestens einen Transportbahn einzeln angesteuert und reguliert, so dass eine optimierte Anpassung an die nachfolgende Produktionseinheit möglich ist.

Gemäß der Ausführungsform mit mindestens zwei parallelen Transportbahnen werden bei diesem Verfahren die jeweiligen ersten und zweiten Transporteinheiten der jeweiligen Transportbahnen einzeln angesteuert und reguliert, so dass eine optimierte Anpassung an die nachfolgende Produktionseinheit möglich ist.

Das Verfahren kann alternativ oder zusätzlich zu den beschriebenen Merkmalen ein oder mehrere Merkmale und/oder Eigenschaften der zuvor beschriebenen Vorrichtung umfassen.

Da die Einstellung der Artikelanordnung auf jeder Transportbahn einzeln gesteuert erfolgt, ist es insbesondere auch möglich, bei einer Anordnung von mehreren parallelen Transportbahnen gezielt nur einzelne bzw. eine reduzierte Anzahl zu verwenden. Die Umstellung des Transportes von n Reihen auf (n-1) Reihen, (n-2 Reihen) etc. ist deutlich vereinfacht, insbesondere ist es nunmehr nicht notwendig, das ein Transport auf der mindesten einen Referenzbahn erfolgen muss.

Das erfindungsgemäße Verfahren 1 führt insbesondere zu einer erhöhten bzw. verbesserten Prozesssicherheit und Genauigkeit durch die Einzelanpassung der jeweiligen Transportbahnen. Insbesondere entstehen keine Fehlwerte durch falsche Anordnung der Artikel auf dem Referenzband.Die hierbei beschriebene Positionskorrektur kann insbesondere bei einem einbahnigen Artikeltransport eingesetzt werden. Die Positionskorrektur ist jedoch auch mit entsprechender Ausstattung jeder Transportbahn mit mindestens einem eigenen Detektionsmittel beliebig erweiterbar. Da die mehreren Transportbahnen jeweils auf Informationen zur selben Masterachse zugreifen, werden die Artikel auf den parallelen Transportbahnen anhand der Masterachse in Gleichschritt zueinander gebracht.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer erfindungsgemäßen Vorrichtung mit einer Transportbahn.
Fig. 2 zeigt eine schematische Ansicht einer erfindungsgemäßen Vorrichtung mit zwei parallelen Transportbahnen.
Fig. 3 zeigt eine schematische Ansicht einer weiteren Ausführungsform einer erfindungsgemäßen Vorrichtung mit zwei parallelen Transportbahnen.

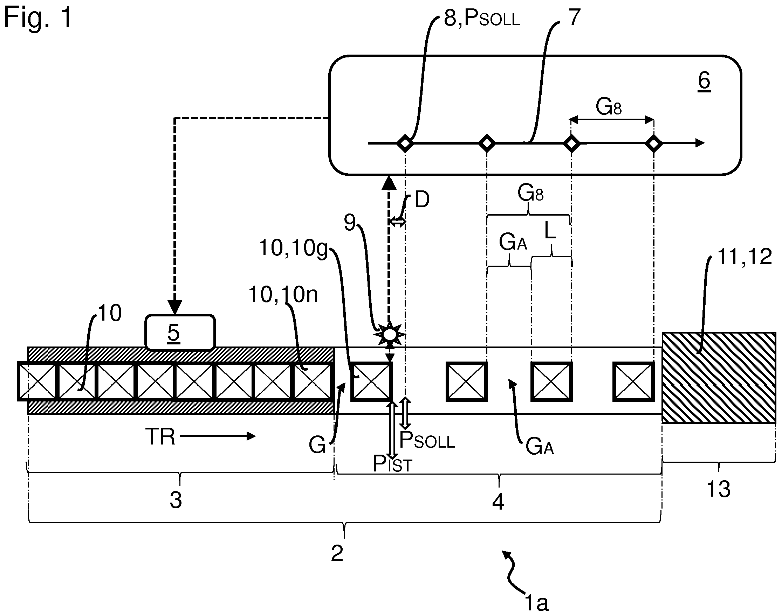

Für gleiche oder gleich wirkende Elemente der Erfindung werden in den Figuren 1 bis 3 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und/oder das erfindungsgemäße Verfahren ausgestaltet sein können und stellen keine abschließende Begrenzung dar.

Die Fig. 1 zeigt eine schematische Ansicht einer erfindungsgemäßen Vorrichtung 1a mit einer Transportbahn 2. Die Artikel 10, beispielsweise Gebinde aus Getränkebehältern o.ä., werden in einer Transportrichtung TR auf mindestens einer Transportbahn 2 bewegt Die Transportbahn 2 umfasst zwei Transporteinheiten, insbesondere ein sogenanntes Stoppband 3 und ein sogenanntes Trennband 4. Das Stoppband 3 und das Trennband 4 werden beispielsweise jeweils durch endlos umlaufende Förderbänder o.ä. gebildet. Die Geschwindigkeit des Stoppbandes 3 kann insbesondere über eine am Stoppband 3 angeordnete elektronische Getriebekopplung 5 eingestellt werden.

Am Übergang zwischen dem Stoppband 3 und dem Trennband 4 werden zwischen den Artikeln 10 Abstände G ausgebildet. Die Abstände G entstehen insbesondere dadurch, dass das Trennband 4 eine höhere Transportgeschwindigkeit aufweist als das Stoppband 3. Die Größe der Abstande G_{A} zwischen aufeinanderfolgenden Artikeln 10 auf dem Trennband 4 hängt insbesondere von der Geschwindigkeitsdifferenz zwischen dem Stoppband 3 und dem Trennband 4 ab.

Für die nachfolgende (nicht dargestellte) Produktionseinrichtung kann nicht nur der Abstand zwischen den Artikeln 10 wichtig sein, sondern insbesondere auch der Zeitpunkt, an dem die korrekt beabstandeten Artikel 10 an einer nachfolgenden Produktionseinrichtung eintreffen. Aus diesem Grund kann es notwendig sein, die Anordnung der beabstandeten Artikel auf dem Transportband 4 nachzukorrigieren.

Um die gewünschte Anordnung der Artikel 10 auf der mindestens einen Transportbahn 2 zu erzielen, insbesondere um die gewünschte Anordnung der Artikel 10 auf dem Trennband 4 der Transportbahn 2 zu erzielen, umfasst die Vorrichtung 1a eine Steuereinheit 6. Diese enthält Informationen zu einer Masterachse 7. Die Masterachse 7 definiert die gewünschte Anordnung der Artikel 10 in dem Bereich der Trennbahn 4. Die Masterachse 7 ist insbesondere eine endlos umlaufende virtuelle Masterachse.

Der geplante Abstand G_{A} zwischen den Artikeln 10 auf dem Trennband 4 ist erfindungsgemäß mit Hilfe von Positionsmarken 8 auf den Masterachse 7 abgebildet. Insbesondere sind die Positionsmarken 8 in einem Abstand Gs auf der Masterachse 7 angeordnet, der eine Summe aus dem geplanten Abstand G_{A} zwischen den Artikeln 10 auf dem Trennband 4 und der Artikellänge L entspricht.

Im Anfangsbereich des Trennbands 4 ist ein Positionssensor 9 angeordnet, der eine Ist- Position P_{IST} des Artikels 10 auf dem Trennband 4 ermittelt. Diese Information wird an die Steuereinheit 6 übermittelt. Diese vergleicht die Ist- Position P_{IST} des Artikels 10 mit einer auf der Masterachse definierten Soll- Position P_{SOLL}. Ergibt sich hierbei eine Abweichung D, dann berechnet die Steuereinheit 6 einen Korrekturwert. Anschließend reguliert die Steuereinheit 6 die dem Stoppband 3 zugeordnete Getriebekopplung 5. Insbesondere wird über die elektronische Getriebekopplung 5 die Geschwindigkeit bzw. Beschleunigung des Stoppbandes 3 verändert und damit die Abweichung D der Artikelposition korrigiert.

Gemäß der hier beschriebenen Ausführungsform wird nur die Geschwindigkeit bzw. Beschleunigung des Stoppbandes 3 verändert, während das Trennband 4 konstant weiterläuft. Die Änderungen der Geschwindigkeit und/oder Beschleunigung des Stoppbandes 3 wirkt sich insbesondere auf die nachlaufenden Artikel 10 aus und gleicht somit die Abstände G_{A} zwischen diesen Artikeln 10 auf dem Trennband 4 an die durch die Masterachse 7 vorgegebenen Abstände G₈ an. Die Messung einer Ist- Position P_{IST} eines Artikels 10g im Bereich des Trennbands 4 wirkt sich somit insbesondere nicht auf den gemessenen Artikel 10g an sich aus, sondern erst auf die diesem Artikel 10g auf dem Stoppband 3 nachfolgenden Artikel 10n.

Bei einem Produktwechsel, beispielsweise wenn Artikel 10 anderer Größe verarbeitet werden sollen, oder wenn die Artikel 10 einer anderen Produktionseinrichtung mit anderen Anforderungen zugeführt werden sollen, werden entsprechend neue Parameter für die Masterachse 7 in die Steuereinheit 6 eingegeben und somit neue Positionsmarken 8 definiert.

Eine beschriebene Vorrichtung 1a kann gemäß der in Fig. 1 beschriebenen Ausführungsform verwendet werden, um die Abstände G zwischen aufeinander folgenden Artikeln 10 auf einer einzelnen Transportbahn 2 weitgehend an die gewünschten Abstände G_{A} anzupassen. Insbesondere kann die Positionskorrektur auch bei einem einbahnigen Artikeltransport eingesetzt werden, da die Anpassung der Abstände G zwischen aufeinander folgenden Artikeln 10 anhand einer virtuellen Masterachse 7 und nicht wir im Stand der Technik aufgrund der Anordnung von Artikeln auf einer realen parallelen Transportbahn erfolgt.

Für eine finale Feinjustierung der Abstände G_{A} zwischen den Artikeln 10 kann es vorteilhaft sein, im Anschluss an die zweite Transporteinheit 4 der Transportbahn 2 eine weitere Einteilvorrichtung 11 anzuordnen, beispielsweise eine Einteilvorrichtung 12 mit einer Schubstange.

Die Einteilvorrichtung 12 mit mindestens einer Schubstange ist insbesondere ein umlaufendes System. Die mindestens eine Schubstange /(nicht dargestellt) bewegt sich oberhalb der auf einer weiteren Transporteinheit oder einem weiteren Bereich der zweiten Transporteinheit 4des Transportbahn 2 angeordneten und transportierten Artikel 10 entgegen der Transportrichtung TR der Artikel 10. Die mindestens eine Schubstange taucht hinter den Artikeln 10 ein und wird anschließend in Transportrichtung TR der Artikel bewegt. Da die Schubstange in der Regel eine zumindest geringfügig höhere Geschwindigkeit als die Transportgeschwindigkeit der Artikel 10 aufweist, bringt sie die Artikel 10 in einen vorgegebenen Gleichschritt, indem Sie an deren Rückseite anliegt und die Artikel 10 in Transportrichtung TR gegebenenfalls leicht anschiebt.

Am Ende der Feinjustierstrecke 13 taucht die Schubstange wieder nach oben aus den Artikeln 10 heraus und wird entgegen der Transportrichtung TR der Artikel 10, oberhalb derselben zurück verfahren, um erneut zwischen nachlaufende Artikel 10 einzutauchen und diese auf Gleichschritt zu bringen.

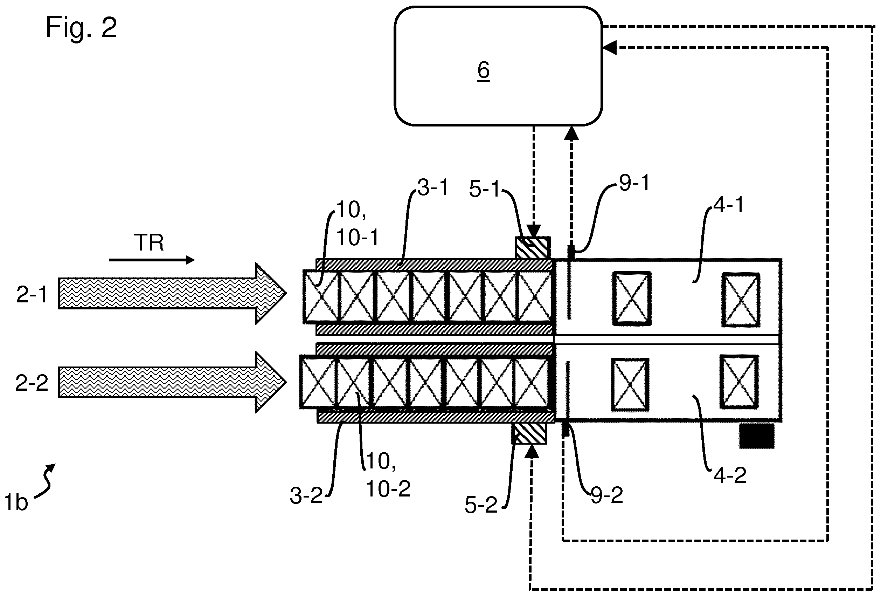

Die schematische Ansicht der Fig. 2 zeigt eine erfindungsgemäße Vorrichtung 1b mit zwei parallelen Transportbahnen 2-1 und 2-2. Jede dieser Transportbahnen 2-1 und 2-2 umfasst mindestens einen Positionssensor 9-1, 9-2 zur Erfassung einer Artikelposition P_{IST} eines Artikels 10-1 bzw. 10-2 auf der jeweiligen Transportbahn 2-1, 2-2 relativ zur Masterachse (nicht dargestellt). Die von dem jeweiligen Positionssensor 9-1, 9-2 erfasste Position wird als entsprechendes Signal an die Steuereinheit 6 übermittelt, die die Informationen zur virtuellen Masterachse und den gewünschten Abständen G_{A} zwischen den Artikeln 10 bzw. der gewünschten Anordnung der Artikel 10 auf dem Trennband 4 gespeichert hat (vgl. auch Fig. 1). Die Signale der Positionssensoren 9-1, 9-2 werden durch die Steuereinheit 6 entsprechend ausgewertet, wie dies im Zusammenhang mit Fig. 1 ausführlich beschrieben worden ist.

Die zwei Transportbahnen 2-1, 2-2 werden jeweils individuell reguliert. D.h., die jeweilige Getriebekopplung 5-1, 5-2 der jeweils ersten Stoppbänder 3-1, 3-2 der zwei Transportbahnen 2-1, 2-2 wird durch die Steuereinheit 6 individuell anhand einer auf der jeweiligen Transportbahn 2-1, 2-2 gemessenen Position der Artikel 10-1, 10-2 angesteuert, um die Artikel 10-1 der Transportbahn 2-1 mit den Artikeln 10-2 der Transportbahn 2-2 gemäß den Vorgaben der Masterachse (nicht dargestellt) in Gleichschritt zu bringen. Die Regulierung der einzelnen Transportbahnen 2-1, 2-2 erfolgt nur aufgrund der jeweils gemessenen Ist- Position P_{IST} der jeweils auf der entsprechenden Transportbahn 2-1, 2-2 angeordneten Artikel 10-1, 10-2 relativ zu einer auf der gemeinsamen, virtuellen Masterachse vorgegebenen Soll- Position P_{SOLL}. Es erfolgt kein Vergleich der Position eines Artikels 10-1 auf der Transportbahn 2-1 mit der Position eines Artikels 10-2 auf der anderen Transportbahn 2-2. D.h., es erfolgt kein Angleichen der Artikelposition eines Artikels 10-1 auf der Transportbahn 2-1 aufgrund der Artikelposition eines Artikels 10-2 auf der Transportbahn 2-2.

Im Gegensatz zum bekannten Stand der Technik werden somit nicht die Abstände zwischen den Artikeln 10-1, 10-2 auf den parallel laufenden Transportbahnen 2-1, 2-2 bzw. die Anordnung der Artikel 10-1, 10-2 auf den parallelen Transportbahnen 2-1, 2-2 miteinander verglichen und aneinander angepasst. Stattdessen erfolgt die Anordnung anhand einer vorzugsweise endlos umlaufenden, virtuellen Masterachse (nicht dargestellt), die durch die Steuereinheit 6 vorgegeben wird.

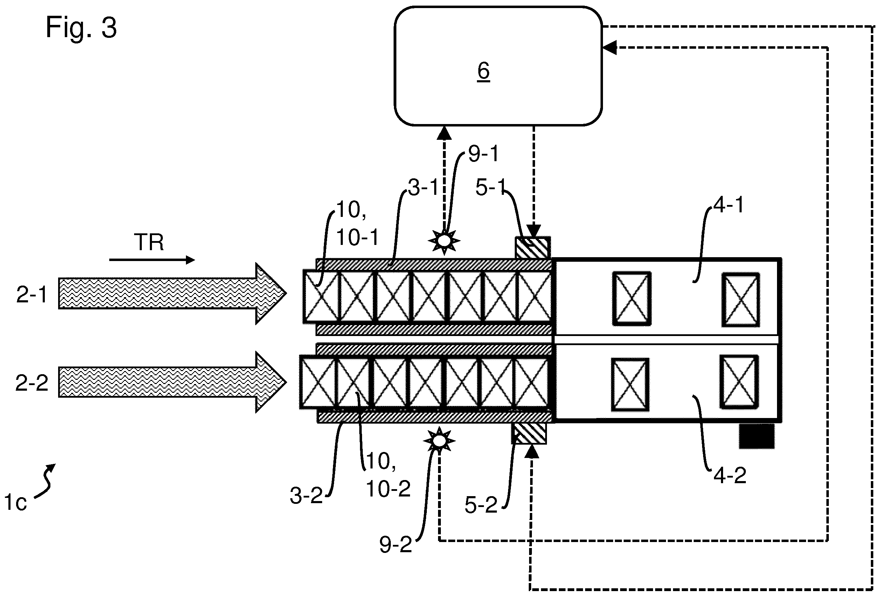

Die Fig. 3 zeigt eine schematische Ansicht einer weiteren Ausführungsform einer erfindungsgemäßen Vorrichtung 1c mit zwei parallelen Transportbahnen 2-1 und 2-2. Analog zu der in Fig. 2 beschriebenen Ausführungsform umfasst jede der Transportbahnen 2-1 und 2-2 mindestens einen Positionssensor 9-1, 9-2 zur Erfassung einer Artikelposition P_{IST} eines Artikels 10-1 bzw. 10-2 auf der jeweiligen Transportbahn 2-1, 2-2 relativ zur Masterachse (nicht dargestellt). Insbesondere sind die einen Positionssensoren 9-1, 9-2 jeweils dem Stoppband 3-1, 3-2 der jeweiligen Transportbahn 2-1, 2-2 zugeordnet.

Die von dem jeweiligen Positionssensor 9-1, 9-2 erfasste Position wird als entsprechendes Signal an die Steuereinheit 6 übermittelt, die die Informationen zur virtuellen Masterachse und den gewünschten Abständen G_{A} zwischen den Artikeln 10 bzw. der gewünschten Anordnung der Artikel 10 auf dem Trennband 4 gespeichert hat (vgl. auch Fig. 1). Die Signale der Positionssensoren 9-1, 9-2 werden durch die Steuereinheit 6 entsprechend ausgewertet, wie dies im Zusammenhang mit Fig. 1 ausführlich beschrieben worden ist.

Die individuelle Regulierung der zwei Transportbahnen 2-1, 2-2 erfolgt vergleichbar gemäß der Beschreibung zu Fig. 2. Die Messung einer Ist- Position P_{IST} eines Artikels 10 im Bereich der ersten Transporteinheit 3-1 oder 3-2 wirkt sich durch die entsprechend gesteuerte Regulierung der ersten Transporteinheit 3-1 oder 3-2somit insbesondere auch auf den gemessenen Artikel 10 an sich aus und nicht erst auf die dem vermessenenArtikel 10 auf der Transportbahn 2-1 oder 2-2 nachfolgenden Artikel 10.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1: Vorrichtung
- 2: Transportbahn
- 3: Stoppband
- 4: Trennband
- 5: Getriebekopplung
- 6: Steuereinheit
- 7: Masterachse
- 8: Positionsmarke
- 9: Sensor
- 10: Artikel
- 11: Einteilvorrichtung
- 12: Einteilvorrichtung mit Schubstange
- 13: Feinjustierstrecke
- A: Abstand
- D: Abweichung
- G: Abstand
- L: Länge
- P_{IST}: Ist- Position
- P_{SOLL}: Soll- Position
- TR: Transportrichtung

## Patentansprüche

1. Verfahren zum Anordnen von Artikeln (10), die in einer Transportrichtung (TR) auf mindestens einer Transportbahn (2) bewegt werden,
wobei ein definierter Abstand (G) zwischen aufeinanderfolgenden Artikeln (10) innerhalb der mindestens einen Transportbahn (2) ausgebildet wird,
wobei die mindestens eine Transportbahn (2) eine erste Transporteinheit (3), eine in Transportrichtung (TR) der Artikel (10) an die erste Transporteinheit (3) angrenzende zweite Transporteinheit (4) und eine Steuereinheit (6) umfasst,
wobei die Steuereinheit (6) Informationen zu einer Masterachse (7) enthält, bei welchen Informationen es sich um Informationen zum geplanten Artikelintervall, umfassend den Abstand nach dem Artikel und die Artikelgröße in Transportrichtung (TR), handelt,
wobei die Masterachse (7) die Anordnung der Artikel (10) in einem Bereich der zweiten Transporteinheit (4) definiert,
wobei mindestens eine Ist- Position (P_{IST}) mindestens eines Artikels (10) auf der Transportbahn (2) ermittelt wird und mit einer auf der Masterachse (7) vorgegebenen Soll- Position (P_{SOLL}) verglichen wird,
wobei aus einer Abweichung (D) zwischen der Ist- Position (P_{IST}) des Artikels (10) und der durch die Masterachse (7) vorgegebenen Soll- Position (P_{SOLL}) durch die Steuereinheit (6) eine Änderung der Geschwindigkeit und/oder Beschleunigung der ersten Transporteinheit (3) der mindestens einen Transportbahn (2) berechnet wird und wobei daraufhin die Geschwindigkeit und/oder Beschleunigung der ersten Transporteinheit (3) durch die Steuereinheit (6) reguliert wird,
**dadurch gekennzeichnet, dass** ein geplanter Abstand (GA) zwischen den Artikeln (10) auf dem Trennband (4) mit Hilfe von Positionsmarken (8) auf der Masterachse (7) abgebildet wird, welche in einem Abstand (G8) auf der Masterachse angeordnet werden, der einer Summe aus einem geplanten Abstand (GA) zwischen den Artikeln (10) auf der zweiten Transporteinheit (4) und einer Artikellänge (L) entspricht.

2. Verfahren nach Anspruch 2, bei dem die Steuereinheit (6) eine der ersten Transporteinheit (3) der Transportbahn (2) zugeordnete elektronische Getriebekopplung (5) ansteuert und/oder reguliert, insbesondere wobei die Steuereinheit (6) die Geschwindigkeit und/oder Beschleunigung der ersten Transporteinheit (3) durch die elektronische Getriebekopplung (5) ansteuert.

3. Verfahren nach Anspruch 1 oder 2, bei dem die jeweiligen Transporteinheiten (3-1, 3-2, 4-1, 4-2) von mindestens zwei parallelen Transportbahnen (2-1, 2-2) unabhängig voneinander durch die Steuereinheit (6) angesteuert und/oder reguliert werden, so dass die Artikel (10-1,10-2) auf den mindestens zwei parallelen Transportbahnen (2-1, 2-2) im Bereich der jeweils zweiten Transporteinheit (4-1, 4-2) in Gleichschritt gebracht werden.

4. Verfahren nach Anspruch 3, bei dem die Ist- Position (P_{IST}) mindestens eines Artikels (10) auf jeder der mindestens zwei parallelen Transportbahnen (2-1, 2-2) jeweils individuell ermittelt und mit einer durch die Masterachse (7) definierten Soll- Position (P_{SOLL}) verglichen wird.

5. Verfahren nach Anspruch 4, bei dem die Steuereinheit (6) für jede Transportbahn (2) die jeweilige Abweichung (D) zwischen der Ist- Position (P_{IST}) und der Soll- Position (P_{SOLL}) der Artikel (10) ermittelt;
wobei jeweils aus der Abweichung (D) zwischen der Ist- Position (P_{IST}) und der SollPosition (P_{SOLL}) eine Änderung der Geschwindigkeit und/oder Beschleunigung der ersten Transporteinheit (3) der jeweiligen Transportbahn (2) berechnet und
wobei die Steuereinheit (6) die Geschwindigkeit und/oder Beschleunigung der ersten Transporteinheit (3) der jeweiligen Transportbahn (2) entsprechend reguliert.

## Claims

1. A method used to arrange articles (10) that are being moved in a transport direction (TR) on at least one transport path (2),
wherein a defined space (G) between successive articles (10) is formed within the at least one transport path (2),
wherein the at least one transport path (2) comprises a first transport unit (3), a second transport unit (4) that is adjacent in transport direction (TR) of the articles (10) to the first transport unit (3), and a control unit (6),
wherein the control unit (6) holds information on a master axis (7), which information is information on the planned interval between articles comprising the space after the article and the article size in transport direction (TR),
wherein the master axis (7) defines the arrangement of the articles (10) in a section of the second transport unit (4),
wherein at least one actual position (P_{IST}) of at least one article (10) on the transport path (2) is detected and compared with a target position (P_{SOLL}) specified on the master axis (7),
wherein a change of the speed and/or of the acceleration of the first transport unit (3) of the at least one transport path (2) is calculated by the control unit (6) from a deviation (D) of the actual position (P_{IST}) of article (10) from the target position (P_{SOLL}) specified by the master axis (7), and wherein the speed and/or acceleration of the first transport unit (3) is thereupon regulated by the control unit (6),
**characterised in that** a planned space (GA) between the articles (10) on the separation belt (4) is indicated on the master axis (7) by means of position marks (8), which are arranged on the master axis spaced apart by a space (G8) that corresponds to a sum of a planned distance (GA) between the articles (10) on the second transport unit (4) and an article length (L).

2. The method according to claim 2, in which the control unit (6) controls and/or regulates an electronic gear coupling (5) that is assigned to a first transport unit (3) of the transport path (2), in particular, wherein the control unit (6) controls the speed and/or acceleration of the first transport unit (3) by means of the electronic gear coupling (5).

3. The method according to claim 1 or 2, in which each of the particular transport units (3-1, 3-2, 4-1, 4-2) of at least two parallel transport paths (2-1, 2-2) are controlled and/or regulated independently of one another by the control unit (6) such that the articles (10-1,10-2) on the at least two parallel transport paths (2-1, 2-2) are brought into step with one another in the section of each particular second transport unit (4-1, 4-2).

4. The method according to claim 3, in which the actual position (P_{IST}) of at least one article (10) on each of the at least two parallel transport paths (2-1, 2-2) is in each instance individually detected and compared with a target position (P_{SOLL}) defined by the master axis (7).

5. The method according to claim 4, in which the control unit (6) detects each particular deviation (D) for each transport path (2) of the actual position (P_{IST}) from the target position (P_{SOLL}) of the articles (10);
wherein a change of the speed and/or of the acceleration of the first transport unit (3) of the particular transport path (2) is in each instance calculated from the deviation (D) of the actual position (P_{IST}) from the target position (P_{SOLL}), and
wherein the control unit (6) correspondingly regulates the speed and/or acceleration of the first transport unit (3) of the particular transport path (2).

## Revendications

1. Procédé de disposition d'articles (10) qui sont déplacés dans une direction de transport (TR) sur au moins un trajet de transport (2),
dans lequel une distance définie (G) séparant des articles (10) successifs est formée à l'intérieur dudit au moins un trajet de transport (2),
dans lequel ledit au moins un trajet de transport (2) comprend une première unité de transport (3), une deuxième unité de transport (4) qui est contiguë à la première unité de transport (3) dans la direction de transport (TR) des articles (10), ainsi qu'une unité de commande (6),
dans lequel l'unité de commande (6) contient des informations relatives à un axe maître (7), lesquelles informations sont des informations relatives à l'intervalle d'article prévu, comprenant la distance après l'article et la taille d'article dans la direction de transport (TR),
dans lequel ledit axe maître (7) définit l'agencement des articles (10) dans une zone de la deuxième unité de transport (4),
dans lequel au moins une position réelle (P_{IST}) d'au moins un article (10) sur le trajet de transport (2) est déterminée et est comparée à une position de consigne (P_{SOLL}) prédéterminée sur l'axe maître (7),
une modification de la vitesse et/ou de l'accélération de la première unité de transport (3) dudit au moins un trajet de transport (2) est calculée par l'unité de commande (6) à partir d'un écart (D) entre la position réelle (P_{IST}) de l'article (10) et la position de consigne (P_{SOLL}) prédéterminée par l'axe maître (7), et dans lequel la vitesse et/ou l'accélération de la première unité de transport (3) est alors régulée par l'unité de commande (6),
**caractérisé par le fait qu'**une distance planifiée (GA) séparant les articles (10) sur la bande de séparation (4) est représentée sur l'axe maître (7) à l'aide de repères de position (8) qui sont disposés à une distance (G8) sur l'axe maître, qui correspond à une somme d'une distance planifiée (GA) séparant les articles (10) sur la deuxième unité de transport (4) et une longueur d'article (L).

2. Procédé selon la revendication 2, dans lequel l'unité de commande (6) commande et/ou régule un accouplement électronique d'engrenage (5) associé à la première unité de transport (3) du trajet de transport (2), en particulier dans lequel l'unité de commande (6) commande la vitesse et/ou l'accélération de la première unité de transport (3) grâce à l'accouplement électronique d'engrenage (5).

3. Procédé selon la revendication 1 ou 2, dans lequel les unités de transport (3-1, 3-2, 4-1, 4-2) respectives d'au moins deux trajets de transport (2-1, 2-2) parallèles sont commandées et/ou régulées indépendamment les unes des autres par l'unité de commande (6) de sorte que les articles (10-1,10-2) sur lesdits au moins deux trajets de transport (2-1, 2-2) parallèles sont mis au pas cadencé au niveau de la deuxième unité de transport (4-1, 4 -2) respective.

4. Procédé selon la revendication 3, dans lequel la position réelle (P_{IST}) d'au moins un article (10) sur chacun desdits au moins deux trajets de transport (2-1, 2-2) parallèles est déterminée respectivement individuellement et est comparée à une position de consigne (P_{SOLL}) définie par l'axe maître (7).

5. Procédé selon la revendication 4, dans lequel l'unité de commande (6) détermine l'écart (D) respectif entre la position réelle (P_{IST}) et la position de consigne (P_{SOLL}) de l'article (10) pour chaque trajet de transport (2);
dans lequel un changement de la vitesse et/ou de l'accélération de la première unité de transport (3) du trajet de transport (2) respectif est calculée respectivement à partir de l'écart (D) entre la position réelle (P_{IST}) et la position de consigne (P_{SOLL}) et dans lequel l'unité de commande (6) règule de manière correspondante la vitesse et/ou l'accélération de la première unité de transport (3) du trajet de transport (2) respectif.
